# EUROPEAN PATENT SPECIFICATION

(11) **EP 1 420 099 B1**
(45) Date of publication and mention of the grant of the patent: **01.02.2012**
(21) Application number: 03079097.6
(22) Date of filing: 14.08.2000
(51) Int. Cl.: D06F 37/30, H02K 1/27, H02K 1/30, H02K 5/16, H02K 7/08

(54) **Structure of driving unit in drum type washing machine**
Aufbau der Antriebseinheit in einer Trommelwaschmaschine
Structure de l'unité d'entraînement dans une machine à laver à tambour

(30) Priority: 18.10.1999 KR 4508899; 18.10.1999 KR 4508999
(43) Date of publication of application: 19.05.2004
(62) Divisional of application: 00306911.9
(73) Proprietor: LG Electronics, Inc., Seoul (KR)
(72) Inventor: Kim, Jae Kyum, Kimhae-shi Kyongsangnam-do (KR); Park, Jong A., Changwon-shi Kyongsangnam-do (KR); Kwon, Ho Cheol, Changwon-shi Kyongsangnam-do (KR); Choi, Kang Mo, Hoewon-gu Masan-shi Kyongsangnam-do (KR)
(74) Representative: Palmer, Jonathan R.

(56) References cited:
- DE-A- 4 335 966
- US-A- 5 862 686

## Description

### BACKGROUND OF THE INVENTION

### Field of the Invention

The present invention relates to a drum type washing machine, and more particularly, to a structure of a driving unit in a drum type washing machine.

### Background of the Invention

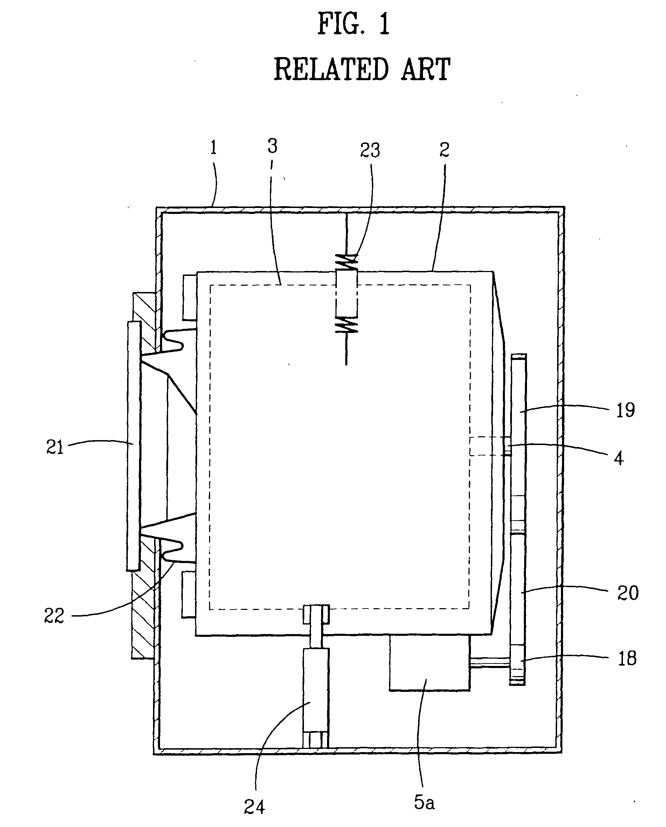

In general, a drum type washing, making washing by using friction between a drum rotated by a motor and laundry in a state detergent, washing water, and the laundry are introduced into the drum, provides effects of beating and rubbing washing, but gives almost no damage to the laundry, and shows no entangling of the laundry. A structure of a related art drum washing machine will be explained with reference to FIG. 1. FIG. 1 illustrates a longitudinal section of a related art drum type washing machine, provided with a tub 2 mounted inside of a cabinet 1, a drum 3 rotatably mounted on a central portion of inside of the tub 2. There is a motor 5a under the tub 2 connected with a pulley 18. There is a drum shaft connected to a rear of the drum 3, to which a drum pulley 19 is coupled. And, the drum pulley 19 on the drum shaft and the motor pulley 18 connected to the motor 5a are connected by a belt 20 for transmission of power. And, there is a door 21 in a front part of the cabinet 1, with a gasket 22 between the door 21 and the tub 2. There is a hanging spring between an inside of an upper portion of the cabinet 1 and an outside of an upper portion of the tub 2, and a friction damper 24 between an inside of a lower portion of the cabinet 1 and a lower side of an outside of the tub 2 for damping vibration of the tub 2 generated during spinning.

However, the related art washing machine has the following disadvantages since driving power of the motor 5a is transmitted to the drum 3 through the motor pulley 18, and the drum pulley 19, and the belt 20 connecting the motor pulley 18 and the drum pulley 19.

First, there is a loss of energy in a course of driving power transmission because the driving power is transmitted from the motor 5a to the drum 3, not directly, but through the belt 20 wound around the motor pulley 18 and the drum pulley 19.

And, the driving power transmission from the motor 5a to the drum 3, not directly, but through many components, such as the belt 20, the motor pulley 18, and the drum pulley 19, causes much noise in the course of power transmission.

The lots of components required for transmission of driving power from the motor 5a to the drum 3, such as the motor pulley 18, the drum pulley 19 and the belt 20, require many assembly man-hours. And, the more the number of components required for transmission of driving power from the motor 5a to the drum 3, the more number of spots which require repair, and the more frequent at which repair required.

In summary, the indirect driving power transmission from the motor 5a to the drum 3 through the motor pulley, the drum pulley, and the belt requires many repair, has much noise, waste of energy, and results in a deterioration of a washing capability.

Moreover, the tub 2 of stainless steel in general in the related art drum washing machine is expensive, has a poor formability, and is heavy.

DE 4335966 discloses a drive device for a washing machine, drier or similar machine, in which the stator core stack is disposed on a bearing cross the centre of which forms a bearing hub through which passes a shaft carrying the rotor of the motor.

GB 233 2212 discloses a drum type washing machine according to the preamble of claim 1.

### SUMMARY OF THE INVENTION

Accordingly, the present invention is directed to a structure of a driving unit in a drum type washing machine that addresses one or more of the problems due to limitations and disadvantages of the related art.

It would be desirable to provide a structure of driving unit in a drum type washing machine, which can reduce noise, repair and waste of energy, and moreover, improve washing capability.

It would also be desirable to provide a structure of driving unit in a drum type washing machine, which has an improved supporting force.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

Accordingly, the invention provides a driving unit for a drum type washing machine as set out in claim 1.

Described arrangements provide a structure of a driving unit in a drum type washing machine having a tub mounted in a cabinet, a drum mounted in the tub, a shaft fixed to the drum for transmission of driving power from the motor to the drum, and bearings mounted on an outer circumference of the shaft at opposite end portions thereof, which includes a metallic bearing housing at a central portion of a rear wall of the tub for supporting the bearings mounted on the outer circumferences of opposite end portions of the shaft.

Other described arrangements provide a structure of driving unit in a drum type washing machine including a tub mounted inside of a cabinet, a bearing housing built in a central portion of a rear wall of the tub for supporting a bearing therein, a shaft connected to a drum mounted inside of the tub for transmission of a driving force from a motor to the drum, bearings mounted on an outer circumference of the shaft at opposite end portions thereof respectively, a rotor coupled to a rear end of the shaft, a stator provided inward of the rotor fixed to the tub rear wall, a connector provided between the shaft and the rotor for transmission of a rotating force from the rotor to the shaft for rotating the shaft and the rotor together, and a supporter fitted between the rear wall of the tub and the stator for supporting the stator and maintaining a concentricity when the stator is mounted to the tub rear wall.

Other described arrangements provide a structure of driving unit in a drum type washing machine including a tub of plastic mounted inside of a cabinet, a metallic bearing housing inserted and built in a central portion of a rear wall of the tub having steps of " 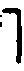 " and " 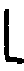 " forms on an inner circumference for supporting bearings therein, a shaft connected to a drum mounted inside of the tub for transmission of a driving power from a motor to the drum, having a front end portion fixed to a spider in the drum rear wall, a brass bushing press fit on a region of the shaft from a portion exposed in rear of the spider to the front bearing for prevention of rusting of the shaft, and steps on an outer circumference thereof for fixing mounting positions of the front bearing and the rear bearing on the shaft, bearings mounted on the outer circumference of the shaft at opposite end portions thereof respectively, a rotor of steel or steel alloy plate coupled to the rear end portion of the shaft, including a bent portion formed along a circumference thereof having a setting surface for supporting magnets fitted to an inside of a front portion of a sidewall extended forward from a periphery of a rear wall, and a hub at a center of the rear wall having a through hole for a fastening member, such as a bolt, for coupling the rotor to the shaft, a plurality of cooling fins formed around the hub in a radial direction each with a length for blowing air toward the stator when the rotor is rotated for cooling down a heat generated at the stator, an embossing between adjacent cooling fins on the rear wall of the rotor for reinforcing the rotor, and a drain hole in each of the embossings, for drain of water, a stator composing the motor together with the rotor, fixed to the tub rear wall inward of the rotor, a connector of plastic provided between the shaft and the rotor for transmission of a rotating force from the rotor to the shaft for rotating the shaft and the rotor together, and a supporter fitted between the rear wall of the tub and the stator for supporting the stator and maintaining a concentricity when the stator is mounted to the tub rear wall.

Other described arrangements provide a structure of driving unit in a drum type washing machine including a tub mounted inside of a cabinet, a drum mounted inside of the tub, a shaft connected to the drum mounted inside of the tub for transmission of a driving force from a motor to the drum, a front bearing and a rear bearing mounted on an outer circumference of the shaft at opposite end portions thereof respectively, a bearing housing built in a central portion of a rear wall of the tub for supporting the front bearing, a rotor composing the motor together with the rotor, and coupled to the rear end portion of the shaft, a stator fixed to the tub rear wall inward of the rotor to compose the motor together with the rotor, a connector serration coupled to the outer circumference of the shaft in front of the rear bearing and fixed to the rotor, for transmission of a rotating power from the rotor to the shaft, and a bearing bracket fixed to the rear wall of the tub to cover an outside of the rotor and support the rear bearing.

Other described arrangements provide a structure of driving unit in a drum type washing machine including a tub of plastic mounted inside of a cabinet, a metallic bearing housing inserted to built in a central portion of a rear wall of the tub having steps on an inner circumference for supporting bearings therein, a shaft connected to a drum mounted inside of the tub for transmission of a driving power from a motor to the drum, having a front end portion fixed to a spider in the drum rear wall, and a brass bushing press fit on a region of the shaft from a portion exposed in rear of the spider to the front bearing for prevention of rusting of the shaft, bearings mounted on the outer circumference of the shaft at opposite end portions thereof respectively, a rotor of steel or steel alloy plate coupled to the rear end portion of the shaft, including a bent portion formed along a circumference thereof having a setting surface for supporting magnets fitted to an inside of a front portion of a sidewall extended forward from a periphery of a rear wall, and a hub at a center of the rear wall having a through hole for a fastening member, such as a bolt, for coupling the rotor to the shaft, a plurality of cooling fins formed around the hub in a radial direction each with a length for blowing air toward the stator when the rotor is rotated for cooling down a heat generated at the stator, an embossing between adjacent cooling fins on the rear wall of the rotor for reinforcing the rotor, and a drain hole in each of the embossings, for drain of water, a stator composing the motor together with the rotor, fixed to the tub rear wall inward of the rotor, a connector of plastic provided between the shaft and the rotor for transmission of a rotating force from the rotor to the shaft for rotating the shaft and the rotor together, a supporter fitted between the rear wall of the tub and the stator for supporting the stator and maintaining a concentricity when the stator is mounted to the tub rear wall, and a bearing bracket fixed to the rear wall of the tub to cover an outside of the rotor and support the rear bearing.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate arrangements including embodiments of the invention and together with the description serve to explain the principles of the invention:

In the drawings:
FIG. 1 illustrates a longitudinal section of a related art drum type washing machine;
FIG. 2A illustrates a longitudinal section of a drum type washing machine having features useful for understanding the invention.
FIG. 2B illustrates a detailed enlarged view of "A" part in FIG. 2A;
FIG. 3 illustrates a perspective view with a partial cut away view of the rotor in FIG. 2;
FIG. 4 illustrates an enlarged perspective view of "B" part in FIG. 3;
FIG. 5 illustrates a perspective view of a bottom in FIG. 3;
FIG. 6 illustrates a perspective view of the stator in FIG. 2;
FIG. 7 illustrates a perspective view of the connector in FIG. 2;
FIG. 8 illustrates a perspective view of a bottom in FIG. 7; and,
FIG. 9 illustrates a longitudinal section of a driving unit in a drum type washing machine in accordance with a preferred embodiment of the present invention.

### DETAILED DESCRIPTION OF THE PREFERRED EMBODIMENT

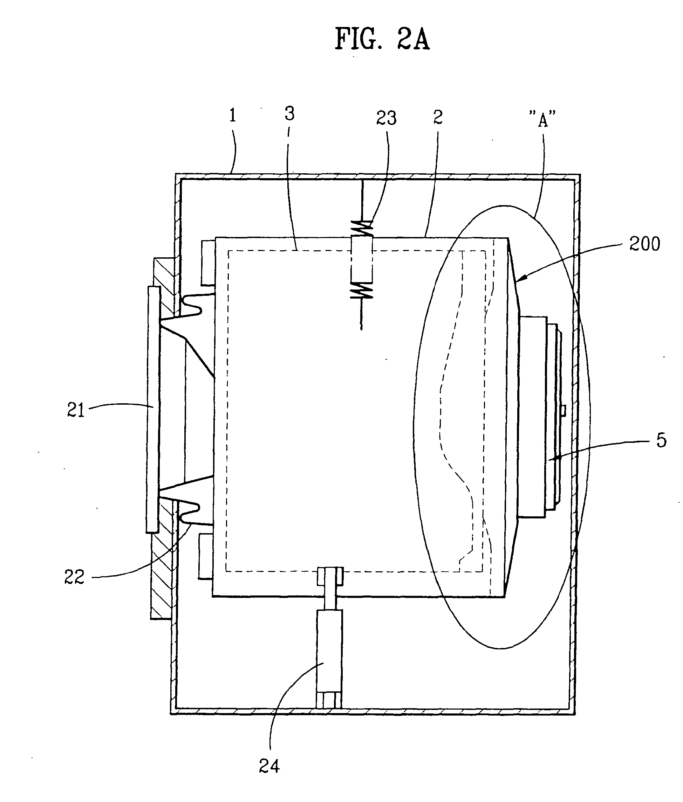

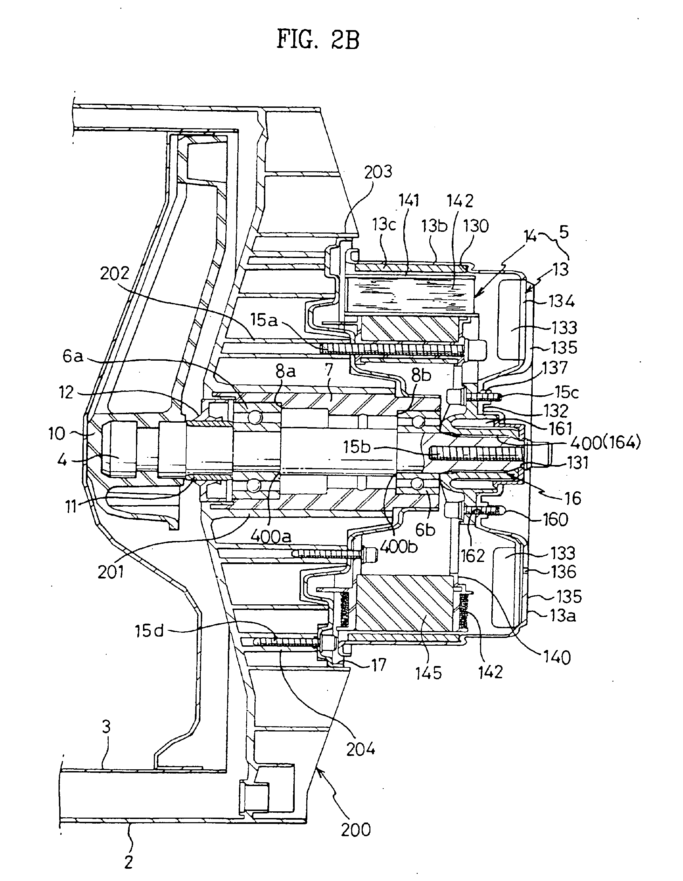

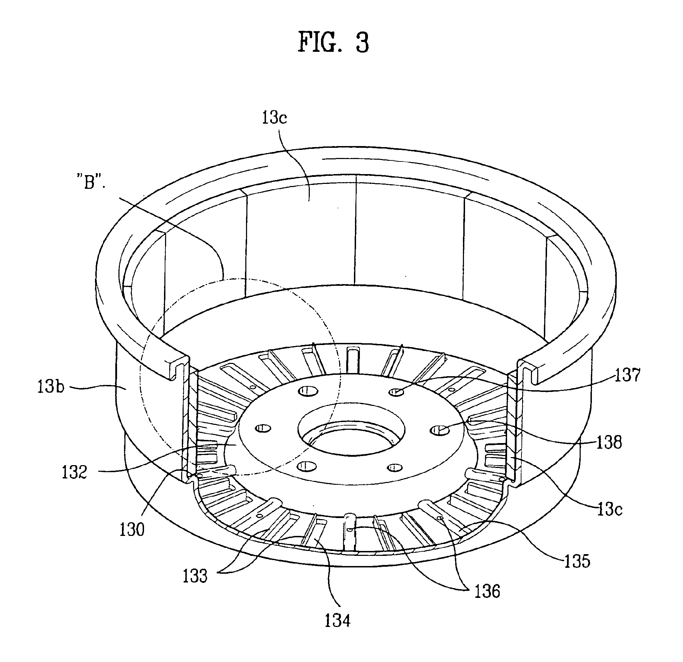

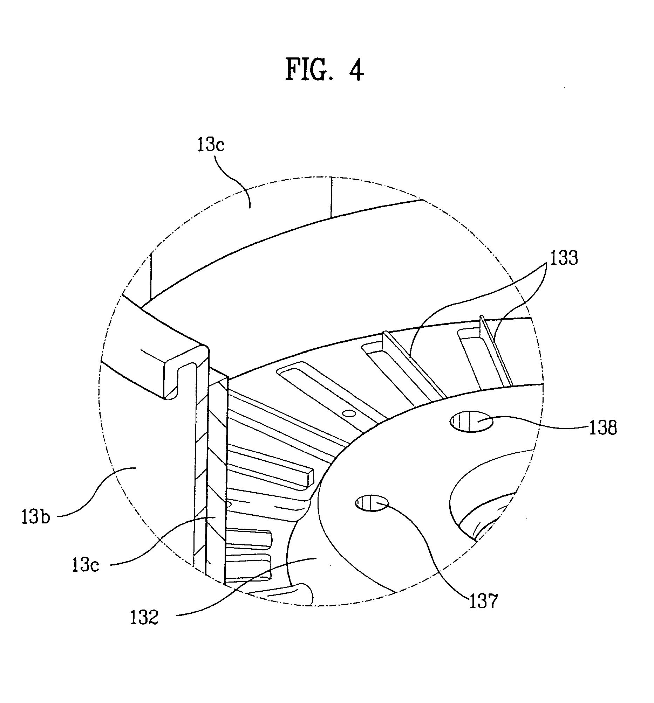

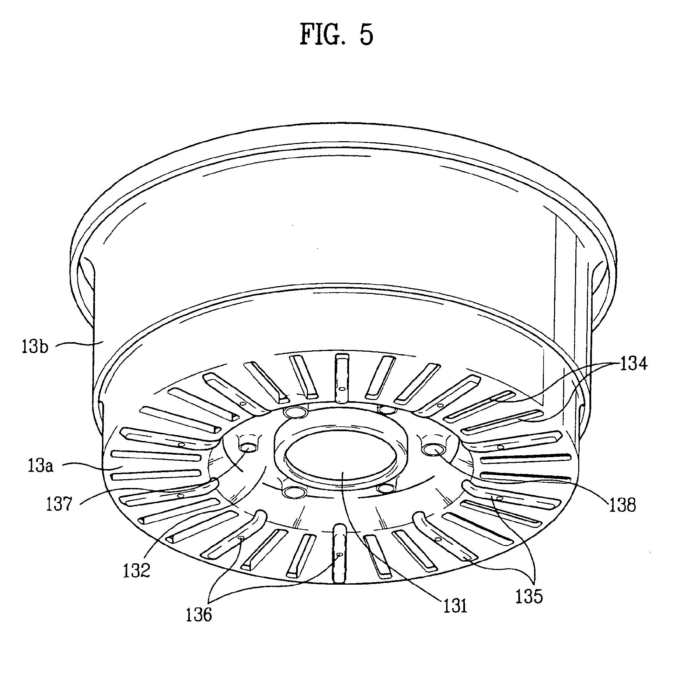

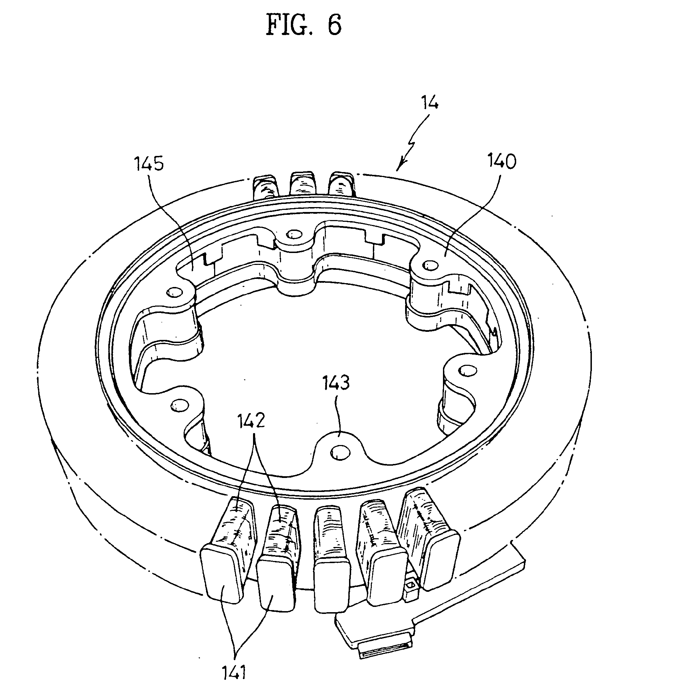

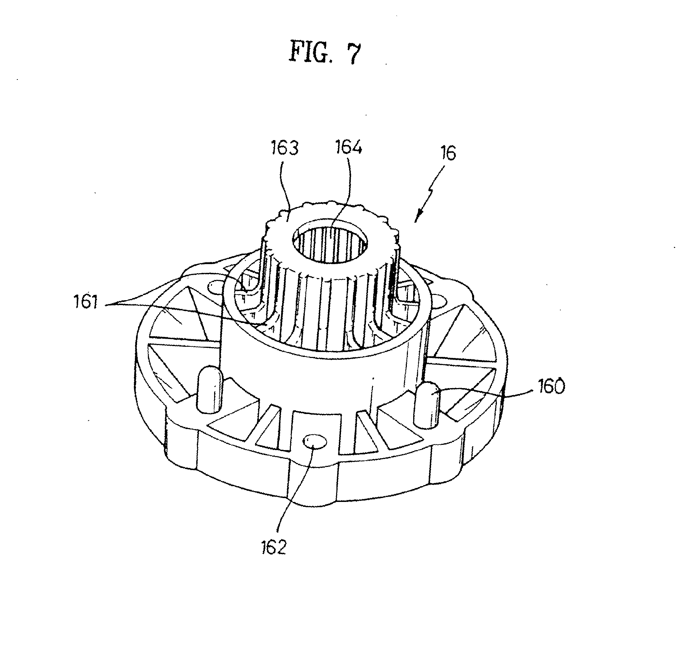

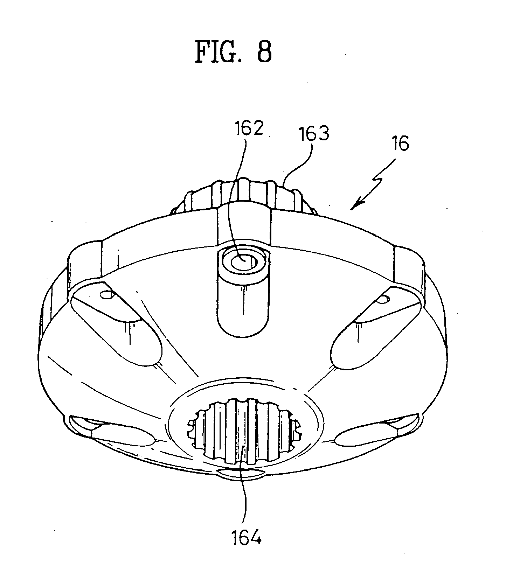

Reference will now be made in detail to the preferred embodiments of the present invention, examples of which are illustrated in the accompanying drawings. A first arrangement which has features useful for understanding the invention will be explained in detail with reference to FIGS. 2A - 8. FIG. 2A illustrates a longitudinal section of a drum type washing machine. FIG. 2B illustrates a detailed enlarged view of "A" part in FIG. 2A, FIG. 3 illustrates a perspective view with a partial cut away view of the rotor in FIG. 2, FIG. 4 illustrates an enlarged perspective view of "B" part in FIG. 3, FIG. 5 illustrates a perspective view of a bottom in FIG. 3, FIG. 6 illustrates a perspective view of the stator in FIG. 2, FIG. 7 illustrates a perspective view of the connector in FIG. 2, and FIG. 8 illustrates a perspective view of a bottom in FIG. 7.

The drum type washing machine in accordance with the first arrangement includes a tub 2 of plastic mounted inside of the cabinet 1, a drum 3 mounted in the tub 2, a shaft 4 fixed to the drum 3 for transmission of driving power from a motor 5 to the drum 3, bearings 6a and 6b fitted on outer circumference of the shaft 4 at both ends thereof, and bearing housings 7 of metal fitted to support the bearings 6a and 6b at a central portion of a rear wall 200 of the tub 2. The bearing housing 7 of metal is formed as a unit with the tub rear wall 200 by an inserted injection molding in the injection molding of the tub 2 of plastic. The bearing housing 7 is preferably formed of aluminum. The bearing housing 7 has steps 8a and 8b for holding the front bearing 6a and the rear bearing 6b fitted in inner circumferences of the bearing housing 7 for preventing the bearings 6a and 6b from being fallen off. Of the steps 8a and 8b formed on the inner circumferences of the bearing housing 7, the front step 8a has a form of " 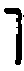 " for supporting a rear end portion of the front bearing 6a fitted to a front end of an outer circumference of the shaft 4, and the rear step 8b has a form of " 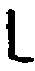 " for supporting a front end portion of the rear bearing 6b fitted to a rear end portion of the shaft 4. And, there are positioning steps 400a and 400b on outer circumferences of the shaft 4 disposed inside of the bearing housing 7 which transmits driving power from the motor 5 to the drum 3, for fixing mounting positions of the front bearing 6a and the rear bearing 6b on the shaft 4. A front end of the shaft 4 is coupled to a spider 10 in a rear wall of the drum 3, a region of the shaft 4 from a portion exposed in rear of the spider 10 to the front bearing 6a has a bushing 11 of brass press fit thereon for prevention of rusting, and there is a sealing member 12 on an outer surface of the bushing 11 for preventing ingress of water toward the bearing. There is a rotor 13 of a direct coupling type motor 5 fixed to a center of a rear end of the shaft 4, and a stator 14 of a crown form, consisting the direct coupling type motor 5 together with the rotor 13, fixed to the rear wall 200 inside of the rotor 13.

Referring to FIGS. 3 ∼ 5, the rotor 13 of steel or steel alloy plate includes a bent portion formed along a circumference thereof having a setting surface 130 for supporting magnets 13c fitted to an inside of front of a sidewall 13b extended forward from a periphery of a rear wall 13a, and a hub 132 at a center of the rear wall 13a having a through hole 131 for fastening members 15a, such as bolts, for coupling the rotor 13 to the shaft 4. An overall form of the rotor 13 is preferably formed by press forming. There are a plurality of cooling fins 133 each formed to have a preset length in a radial direction around the hub 132 of the rotor 13 for blowing air toward the stator 14 during rotation of the rotor 13 for cooling heat generated at the stator 14. The cooling fins 133 are formed by lancing, to bend the cooling fins 133 at a right angle to the rear wall toward the opening to leave through holes 134 for ventilation. There is an embossing 135 between adjacent cooling fins 133 with a drain hole 136 therein for draining water. There are fastening holes 137 for fastening a connector 16 to the rotor 13 and positioning holes 138 for positioning an assembly position of the connector 16 around the through hole 131 in the hub 132 of the rotor 13 at fixed intervals, which connector 16 is serration coupled to an outer circumference of a rear end portion of the shaft 4 exposed to rear of the rear bearing 6b. The connector 16 is formed of resin having a vibration mode different from the rotor 13 of steel or steel alloy plate, and also serves as a bushing for the rotor 13. As shown in FIGS. 2B, 7 and 8, the connector 16 has fastening holes 162 to correspond to the fastening holes 137 in the hub 132 of the rotor 13 around a circumferential direction of the a peripheral region and a dowel pin 160 between adjacent fastening holes 162 as a unit with the connector 16 for insertion in the positioning hole 138 in the rotor 13 for self alignment of the fastening holes 137 and 162 in the rotor 13 and the connector 16, respectively. The connector 16 has a serration in an inside circumference of the hub 163 matched to the serration in the rear end of the shaft 4, and reinforcing ribs 161 on outer circumference of the hub 163 for reinforcing the hub 163. There is a hub 201 on the rear wall 200 of the tub 2 having the bearing housing 7 inserted therein when the tub is injection molded, and fastening bosses 202 on an outer side of the hub 201 along a circumferential direction at fixed intervals for fastening the stator 14 to the rear wall 200 of the tub 2. There is a supporter 17 between the rear wall 200 of the tub 2 and the stator 14, of a form almost identical to an outline of the tub rear wall 200, fixed to the tub rear wall 200 when the stator 14 is assembled for supporting the stator 14 and maintaining concentricity of the stator 14. The supporter 17 has a fore end brought into a close contact with an inside of ribs 203 at one side of the tub rear wall 200, and a rear end brought into a close contact with an outer circumference of a rear end of the bearing housing 7 which is not enclosed by the hub 132, but exposed. In the meantime, as shown in FIGS. 2B and 6, the stator 14 includes a magnetic core 145 of segregated layers of magnetic material, a frame 140 of resin coated on the magnetic core 145, a coil 142 wound around each of winding parts 141 on an outer circumference of the frame 140, and fastening ribs 143 on an inside of the frame 140 for fastening the stator 14 to the tub rear wall 200.

The operation of the driving unit in a drum type washing machine in accordance with the first arrangement will be explained. Upon causing rotation of the rotor 13 by making a current to flow to the coils 142 of the stator 14 in a sequence under the control of a motor driving controller(not shown) fitted on a panel, the shaft 4 serration coupled with the connector 16 fixed to the rotor is rotated, together with the drum 3 as the power is transmitted to the drum 3 through the shaft 4.

In the meantime, the drum type washing machine having the described driving unit applied thereto serves as follows. The tub 2 of the drum type washing machine of the present invention, formed of a plastic with an excellent heat resistance, is light and has a good formability as the tub 2 is injection molded. Since the bearing housing 7 in the drum type washing machine of the present invention is formed of a metal, such as aluminum and the like, the bearing housing 7 is applicable to a drum type washing machine having a drying cycle as the bearing housing shows no thermal deformation. And, since the metallic bearing housing 7 of the present invention is formed integrated with the tub 2 by inserting the bearing housing 7 in the hub 201 on the tub rear wall 200 before the tub 2 of plastic is injection molded, a separate step for assembling the bearing housing 7 to the tub rear wall 200 can be omitted, which simplifies an assembly process, that reduces assembly man-hours. The " 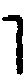 " form of the step 8a in a front portion of an inner circumference of the bearing housing 7 and the " 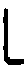 " form of the step 8b in a rear portion of an inner circumference of the bearing housing 7 permit to support a rear end of the front bearing 6a and a fore end of the rear bearing 6b mounted on outer circumference of the shaft 4 at both end portions thereof. That is, the steps 8a and 8b on inner circumferences of the metallic bearing housing 7 on both sides thereof prevent both bearings 6a and 6b from being fallen off the bearing housing 7. The positioning steps 400a and 400b on outer circumferences of the shaft 4 at front and rear portions thereof permit easy positioning of the front bearing 6a and the rear bearing 6b on the shaft 4 in the assembly. The front end portion of the shaft 4 is coupled to the spider 10 in the rear wall, and the brass bushing 11 press fit to the region from the exposed portion outside of the spider 10 of the shaft 4 to the front bearing 6a prevents rusting of the shaft 4. The sealing member 12 outside of the bushing 11 prevents ingress of water toward the bearing.

In the meantime, the rotor 13 of the direct coupling type motor 5 is mounted on a center of the rear end portion of the shaft 4, with the stator 14 disposed on inner side of the rotor, wherein the bend part having the magnet setting surface 130 is formed along a circumferential direction of the sidewall 13b extended forward from a periphery of the rear wall 13a of the rotor 13, for supporting the magnets 13c when the magnets 13c are fitted to an inside surface of the rotor 13, to fabricate the rotor with easy. The through hole 131 of the hub 132 at a center of the rear wall 13a of the rotor 13 permits the fastening member 15b, such as a bolt or the like, to pass therethrough for fastening the rotor 13 to the shaft 4, and the plurality of cooling fins 133 around the hub 132 of the rotor 13 in a radial direction with a length blow air toward the stator 14 during rotation of the rotor 13 for cooling down a heat generated at the stator 14. The cooling fins 133 are formed by lancing, to direct toward the opening of the rotor 13, and to leave through holes 134 for ventilation. The rotor 13 of steel or steel alloy plate is formed by pressing, which shortens a fabrication time period, that improves a productivity. The embossing 135 between the adjacent cooling fins 133 of the rear wall 13a of the rotor 13 improves an overall strength of the rotor 13, and the drain hole 136 in the embossing 135 drains water.

In the meantime, the fastening holes 137 for fastening the connector and the positioning holes 138 for fixing an assembly position of the connector 16 around the through hole 131 in the hub 132 of the rotor 13 permits an easy assembly of the connector 16 to the rotor, which connector 16 is serration coupled to the outer circumference of the rear end portion of the shaft 4 exposed to rear of the rear bearing 6b. That is, once the dowel pins 160 on the connector 16 are inserted in the positioning holes 138 in the rotor 13, the fastening holes 137 and 162 in the rotor 13 and the connector 16 are matched automatically, and by fastening the fastening members 15c through the fastening holes 137 and 162 in the rotor 13 and the connector 16, the connector 16 and the rotor 13 can be assembled with easy. The connector 16 serves to damp vibration from the rotor 13 to the shaft 4 as the connector 16 injection molded of a resin has a different vibration mode from the rotor 13 of steel or steel alloy plate. The serration 164 in the inner circumference of the hub 163 of the connector 16 is fit to the serration 400 in the rear end portion of the shaft 4, to transmit the rotating force of the rotor 13 to the shaft, directly. The reinforcing ribs 161 on an outer circumference of the hub 163 of the connector 16 reinforce the hub 163.

In the meantime, the fastening bosses 202 along a circumference on an outer side of the hub 201 on the rear wall 200 of the tub 2 at fixed intervals permits to fix the stator 14 to the rear wall 200 of the tub 2 by using the fastening boss 202. The supporter 17 between the rear wall 200 of the tub 2 and the stator 14 having a form almost identical to the outline of the rear wall 200 for being fixed to the rear wall 200 of the tub 2 when the stator 14 is fastened permits the stator 14 being supported and maintained of concentricity. That is, once the supporter 17 is fastened to the fastening bosses 204 on the tub rear wall 200, the fore end of the supporter 17 is brought into close contact with an inside surface of the ribs 203 at one side of the tub rear wall 200 and the rear end of the supporter 17 is brought into close contact with the outer circumference of the rear end portion of the bearing housing 7 at a central portion of the tub rear wall 200, which can not be enclosed, but exposed, by the hub 132, such that the supporter 17 supports the stator 14 as well as maintains a concentricity of the stator 14.

The structure of a driving unit in a drum type washing machine in accordance with the first described arrangement has the following advantages.

The motor direct coupling structure of the drum type washing machine permits to reduce repair, and power loss.

The bearing housing of metal in the drum type washing machine shows no thermal deformation, that allows to apply to a product having a drying function.

The rotor of steel or steel alloy plate formed by pressing in the drum type washing machine: requires a very short fabrication time period, with an improved productivity, because the steel or steel alloy plate pressing has an excellent formability.

And, the magnet setting surface on the rotor improves a workability in fitting the magnets, and the drain holes, the cooling fins, and the through holes provided to the rotor can prevent overheating of the motor, improve a reliability of the motor, and prolong a lifetime of the motor.

And, the connector having a vibration mode different from the rotor in the drum type washing machine can attenuate the vibration transmitted from the rotor to the shaft, and the supporter can support the stator and maintain a concentricity of the stator.

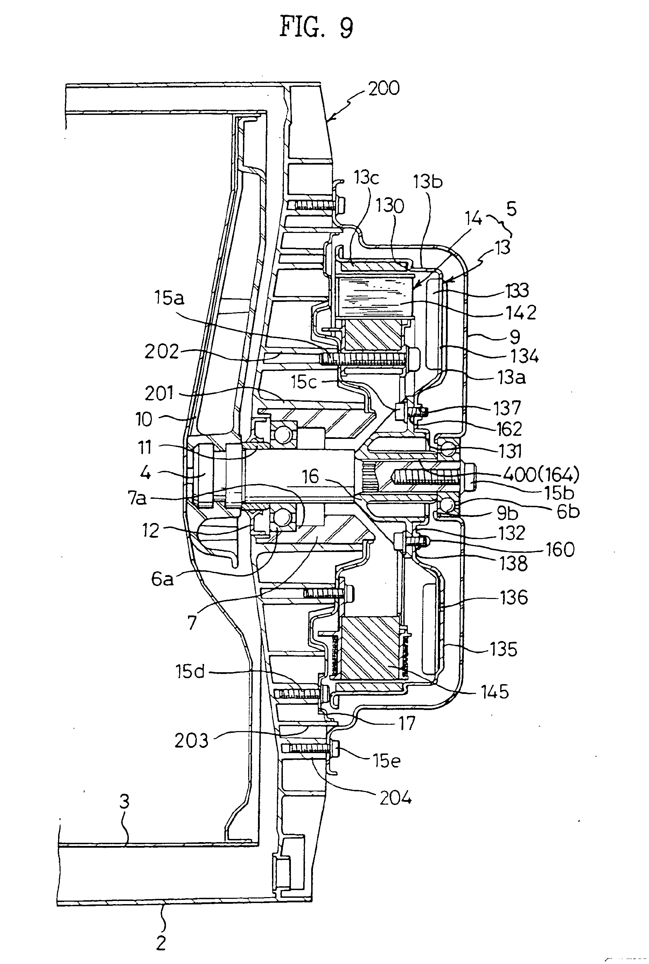

A driving unit in a drum type washing machine in accordance with a preferred embodiment of the present invention will be explained with reference to FIGS. 3 ∼ 9, in detail. FIG. 9 illustrates a longitudinal section of a driving unit in a drum type washing machine in accordance with a second preferred embodiment of the present invention. The rotor, the stator and the connector in the preferred embodiment of the present invention are identical to those of the first described arrangement, to which the same names and reference symbols are given, and will be explained with reference to FIGS. 3 - 8.

The drum type washing machine in accordance with a preferred embodiment of the present invention includes a tub 2 mounted inside of a cabinet 1, a drum 3 mounted inside of the tub 2, a shaft 4 connected to the drum mounted inside of the tub 3 for transmission of a driving force from the motor 5 to the drum, a front bearing 6a and a rear bearing 6b mounted on outer circumferences of the shat 4 at both end portions thereof respectively, a bearing housing 7 built in a central portion of the rear wall 200 of the tub 3 for supporting the front bearing 6a, a rotor 13 coupled to the shaft 4, a stator 14 provided inward of the rotor 13 coupled to the tub rear wall 200, a connector 16 serration coupled to an outer circumference of the shaft 4 in front of the rear bearing 6b and fixed to the rotor 13 for transmission of a rotating force of the rotor 13 to the shaft 4, a supporter 17 fitted between the rear wall 200 of the tub 2 and the stator 14 for supporting the stator and maintaining a concentricity when the stator is mounted to the tub rear wall 200, and a bearing bracket 9 fixed to the tub rear wall 200 for covering outside of the rotor 13 and supporting the front end portion of the rear bearing 6b. The tub 2 is formed of plastic, and has an opened front and a closed rear wall 200 of which thickness is greater than a thickness of a sidewall, and the bearing housing 7 at the central portion of the rear wall 200 of the tub 2 is formed of a metal, wherein the bearing housing 7 is insert injection molded when the plastic tub 2 is injection molded, such that the bearing housing 7 is integrated with the tub rear wall 200. The bearing housing 7 is preferably formed of an aluminum alloy.

In the meantime, there is a step 7a on an inner circumference of the metallic bearing housing 7 for supporting the front bearing 6a to prevent the front bearing 7 from being fallen off the bearing housing 7. The step 7a on the inner circumference of the bearing housing 7 has a form of " 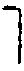 " for having a structure which supports a rear end portion of the front bearing 6a mounted on a front end portion of the shaft 4. The front end portion of the shaft 4 is fixed to a spider 10 in the rear wall 200 of the drum 3, a region of the shaft 4 from a portion exposed in rear of the spider 10 to the front bearing 6a has a bushing 11 of brass press fit thereon for prevention of rusting, and there is a scaling member 12 on an outer surface of the bushing 11 for preventing ingress of water toward the front bearing 6a. There connector 16 is serration coupled to the rear end portion of the shaft 4 for connection between the rotor 13 of the direct coupling type motor 5 and the shaft 4, the rotor 13 is fixed to the connector 16 with fastening members 15c, and the stator 14, forming the direct coupling type motor together with the rotor 13, is fixed to the rear wall 200 of the tub 2 inward of the rotor 13. As shown in FIGS. 3 ∼ 5, the rotor 13 of steel or steel alloy plate includes a bent part having a magnet setting surface 130 formed along a circumferential direction of a sidewall 13b extended forward from a periphery of the rear wall 13a of the rotor 13, for supporting magnets 13c fitted to a front portion of an inside surface of the rotor 13, and a hub 132 having a through hole 131 at a center of the rear wall 13a of the rotor 13 so that a fastening member 15a, such as a bolt or the like, can pass through for coupling the rotor 13 to the shaft 4. An overall form of the rotor 13 is preferably formed by pressing. There are a plurality of cooling fins 133 each formed to have a preset length in a radial direction around the hub 132 of the rotor 13 for blowing air toward the stator 14 during rotation of the rotor 13 for cooling heat generated at the stator 14. The cooling fins 133 are formed by lancing, to bend the cooling fins 133 at a right angle to the rear wall 13a toward the opening to leave through holes 134 for ventilation. There is an embossing 135 between adjacent cooling fins 133 with a drain hole 136 therein for draining water. There are fastening holes 137 for fastening a connector 16 to the rotor 13 and positioning holes 138 for positioning an assembly position of the connector 16 around the through hole 131 in the hub 132 of the rotor 13 at fixed intervals, which connector 16 is serration coupled to an outer circumference of a rear end portion of the shaft 4 exposed in rear of the rear bearing 6b. The connector 16 is formed of resin having a vibration mode different from the rotor 13 of steel or steel alloy plate. As shown in FIGS. 7∼9, the connector 16 has fastening holes 162 to correspond to the fastening holes 137 in the hub 132 of the rotor 13 around a circumferential direction of the a peripheral region and a dowel pin 160 between adjacent fastening holes 162 as a unit with the connector 16 for insertion in the positioning hole 138 in the rotor 13 for self alignment of the fastening holes 137 and 162 in the rotor 13 and the connector 16, respectively. The connector 16 has a serration in an inside circumference of the hub 163 matched to the serration in the rear end of the shaft 4, and reinforcing ribs 161 on outer circumference of the hub 163 for reinforcing the hub 163. There is a hub 201 on the rear wall 200 of the tub 2 having the bearing housing 7 inserted therein when the tub is injection molded, and fastening bosses 202 on an outer side of the hub 201 along a circumferential direction at fixed intervals for fastening the stator 14 to the rear wall 200 of the tub 2. There is a supporter 17 between the rear wall 200 of the tub 2 and the stator 14, of a form almost identical to an outline of the rear wall 200, fixed to the tub 2 rear wall 200 when the stator 14 is assembled for supporting the stator 14 and maintaining concentricity of the stator 14. Once the supporter 17 is fastened to the support fastening bosses 204, a fore end of the supporter 17 is brought into close contact with an inside of ribs 203 at one side of the tub rear wall 200, and a rear end thereof is brought into close contact with an outer circumference of a rear end of the bearing housing 7 which is not enclosed by the hub 132, but exposed, thereby the supporter 17 supporting the stator 14 and maintaining a concentricity of the stator. In the meantime, as shown in FIGS. 3 and 6, the stator 14 includes a ring formed frame 140, a coil 142 wound around each of winding parts 141 on an outer circumference of the frame 140, and fastening ribs 143 on an inside of the frame 140 for fastening the stator 14 to the tub rear wall 200.

In the meantime, referring to FIG. 9, there is an " 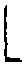 " formed step 900b at an inner end portion of the bearing bracket 9 fixed to the tub rear wall 200 to cover an outer side of the rotor 13. And, there is a rear bearing fixing member 15b at an rear end of the shaft 4 for supporting a rear surface of the shaft 4 to prevent the rear bearing from being fallen off the shaft 4.

The operation of the driving unit in a drum type washing machine in accordance with the preferred embodiment of the present invention will be explained. Upon causing rotation of the rotor 13 by making a current to flow to the coils 142 of the stator 14 in a sequence under the control of a motor driving controller(not shown) fitted on a panel, the shaft 4 serration coupled with the connector 16 fixed to the rotor is rotated, together with the drum 3 as the power is transmitted to the drum 3 through the shaft 4.

In the meantime, the drum type washing machine in accordance with the preferred embodiment of the present invention driven thus serves as follows. Alike the first described arrangement since the tub 1 is formed of a plastic with an excellent heat resistance, the tub 1 is light and has a good formability as the tub 2 is injection molded. Since the bearing housing 7 is formed of a metal, such as an aluminum alloy and the like, the bearing housing 7 is applicable to a drum type washing machine having a drying cycle as the bearing housing shows no thermal deformation. And, since the metallic bearing housing 7 is formed integrated with the tub 2 by inserting the bearing housing 7 in the hub 201 on the tub rear wall 200 before the tub 2 of plastic is injection molded, a separate step for assembling the bearing housing 7 to the tub rear wall 200 can be omitted, which simplifies an assembly process, that reduces assembly man-hours. The step 7a in an inner circumference of a front portion of the bearing housing 7 in the described embodiment of the present invention supports a rear end of the front bearing 6a mounted on an outer circumference of the fore end portion of the shaft 4. That is, the " 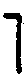 " formed step 7a in a front portion of an inner circumference of the metallic bearing housing 7 of the present invention permits to support the front bearing 6a without being fallen off the bearing housing 7. And, the " 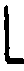 " formed step 900b in an end portion of an inner circumference of the metallic bearing bracket 9 covering an outer side of the rotor 13 fixed to the tub rear wall 200 permits to support a front end of the rear bearing 6b mounted on the rear end portion of the shaft 4, and the rear bearing fixing member 15b on the rear end surface of the shaft 4 prevents the rear bearing 6b from being fallen off the shaft 4.

In the meantime, in the preferred embodiment of the present invention, since the front bearing 6a is mounted in the bearing housing 7 having insert injection molded in the tub 1, and the rear bearing 6b is mounted in an inside of a center portion of the bearing bracket 9, a distance between the front and rear bearings 6a and 6b on the shaft 4 becomes greater, between which the rotor is mounted. The greater distance between the front and rear bearings 6a and 6b permits to withstand a load caused by imbalance of laundry in the drum 1 during spinning better, and a supporting force to the rotor 13 is enhanced as the rotor 13 of the motor is mounted between the front and rear bearings 6a and 6b. Alike the first described arrangement , in the preferred embodiment of the present invention, the brass bushing 11 press fit to the region from the exposed portion outside of the spider 10 of the shaft 4 to the front bearing 6a prevents rusting of the shaft 4. And, alikely, the sealing member 12 outside of the bushing 11 prevents ingress of water toward the bearing.

Alike the first described arrangement, as shown in FIGS. 3 to 6, the bend part having the magnet setting surface 130 is formed along a circumferential direction of the sidewall 13b extended forward from a periphery of the rear wall 13a of the rotor 13, for supporting the magnets 13c when the magnets 13c are fitted to an inside surface of the rotor 13, to fabricate the rotor with easy. Alike the first described arrangement, in the preferred embodiment of the present invention, the plurality of cooling fins 133 around the hub 132 of the rotor 13 in a radial direction with a length blow air toward the stator 14 during rotation of the rotor 13 for cooling down a heat generated at the stator 14. The cooling fins 133 are formed by lancing, to direct toward the opening of the rotor 13, and to leave through holes 134 for ventilation. Since the rotor 13 is formed of steel or steel alloy plate by pressing, which shortens a fabrication time period significantly, a productivity is improved. The embossing 135 between the adjacent cooling fins 133 of the rear wall 13a of the rotor 13 improves an overall strength of the rotor 13, and the drain hole 136 in the embossing 135 drains water.

In the meantime, the fastening holes 137 for fastening the connector and the positioning holes 138 for fixing an assembly position of the connector 16 around the through hole 131 in the hub 132 of the rotor 13 permits an easy assembly of the connector 16 to the rotor, which connector 16 is serration coupled to the outer circumference of the rear end portion of the shaft 4. That is, once the dowel pins 160 on the connector 16 are inserted in the positioning holes 138 in the rotor 13, the fastening holes 137 and 162 in the rotor 13 and the connector 16 are matched automatically, and by fastening the fastening members 15c through the fastening holes 137 and 162, the connector 16 and the rotor 13 can be assembled with easy. The connector 16 serves to damp vibration from the rotor 13 to the shaft 4 as the connector 16 injection molded of a resin has a different vibration mode from the rotor 13 of steel or steel alloy plate. The serration 164 in the inner circumference of the hub 163 of the connector 16 is fit to the serration 400 in the rear end portion of the shaft 4, to transmit the rotating force of the rotor 13 to the shaft, directly. The reinforcing ribs 161 on an outer circumference of the hub 163 of the connector 16 reinforce the hub 163.

In the meantime, the fastening bosses 202 along a circumference on an outer side of the hub 201 on the rear wall 200 of the tub 2 at fixed intervals permits to fix the stator 14 to the rear wall 200 of the tub 2 by using the fastening boss 202. The supporter 17 between the rear wall 200 of the tub 2 and the stator 14 having a form almost identical to the outline of the rear wall 200 for being fixed to the rear wall 200 of the tub 2 when the stator 14 is fastened permits the stator 14 being supported and maintained of concentricity. That is, the front end of the supporter 17 is brought into close contact with an inside surface of the ribs 203 at one side of the tub rear wall 200 and the rear end of the supporter 17 is brought into close contact with the outer circumference of the rear end portion of the bearing housing 7 at a central portion of the tub rear wall 200, which can not be enclosed, but exposed, by the hub 132, such that the supporter 17 supports the stator 14 as well as maintains a concentricity of the stator 14.

The structure of a driving unit in a drum type washing machine in accordance with the preferred embodiment of the present invention has the following advantages.

The motor direct coupling structure of the drum type washing machine of the present invention permits to reduce repair, noise and power loss.

The bearing housing of metal in the drum type washing machine of the present invention shows no thermal deformation, that allows to apply to a product having a drying function.

The rotor of steel or steel alloy plate formed by pressing in the drum type washing machine requires a very short fabrication time period, with an improved productivity, because the steel or steel alloy plate pressing has an excellent formability.

And, the magnet setting surface on the rotor improves a workability in fitting the magnets, and the drain holes, the cooling fins, and the through holes provided to the rotor can prevent overheating of the motor, improve a reliability of the motor, and prolong a lifetime of the motor.

And, the connector having a vibration mode different from the rotor in the drum type washing machine can attenuate the vibration transmitted from the rotor to the shaft, and the supporter can support the stator and maintain a concentricity of the stator.

Particularly, in the preferred embodiment of the present invention, the greater distance between the front and rear bearings permits to withstand a load caused by imbalance of laundry in the drum I during spinning better, and a supporting capability to the rotor is enhanced as the rotor of the motor is mounted between the front and rear bearings.

Thus, by improving a structure of a driving unit of a drum type washing machine, the present invention can reduce noise, repair and power loss, by improving a washing capability, can improve a product reliability, and, by improving workability in fabrication of components of the driving unit, can improve a productivity.

It will be apparent to those skilled in the art that various modifications and variations can be made in the structure of a driving unit in a drum type washing machine of the present invention without departing from the scope of the invention. Thus, it is intended that the present invention cover the modifications and variations of this invention provided they come within the scope of the appended claims.

## Claims

1. A driving unit for a drum type washing machine having a tub mounted inside a cabinet and a drum rotatably mounted inside the tub (2) by means of a shaft (4) connected to the drum (3) for transmission of a driving force from a motor to the drum, the driving unit comprising:
a front bearing (6a) and rear bearing (6b) mounted on an outer circumference of the shaft at opposite end portions thereof, respectively;
a metallic bearing housing (7) built in a central portion of a rear wall of the tub for supporting the front bearing;
a rotor (13) coupled to the rear end portion of the shaft;
a stator (14) fixed to the tub rear wall inward of the rotor to compose the motor together with the rotor; **characterized in that**
a connector (16) serration is coupled to the outer circumference of the shaft in front of the rear bearing and fixed to the rotor, for transmission of a rotating power from the rotor to the shaft; and
a bearing bracket (9) is fixed to the rear wall of the tub to cover an outside of the rotor and support the rear bearing (6b).

2. A driving unit as claimed in claim 1, wherein the tub (2) is formed of plastic and includes an opened front wall and a closed rear wall having a thickness greater than that of a side wall of the tub.

3. A driving unit as claimed in claim 1, wherein the metallic bearing housing (7) is mounted at a central portion of the rear wall of the tub of plastic as one unit by insert injection molding.

4. A driving unit as claimed in claim 1, wherein the metal bearing housing (7) is formed of an alloy of aluminium.

5. A driving unit as claimed in claim 1, wherein the bearing housing (7) has a step (7a) formed on an inner circumference thereof for supporting the front bearing (6a) and preventing the front bearing from being fallen off the bearing housing.

6. A driving unit as claimed in claim 1, wherein the bearing bracket has a step formed at a circumference where the shaft (4) passes therethrough for preventing the rear bearing (6b) from being fallen off the bearing bracket.

7. A driving unit as claimed in claim 1, wherein the shaft (4) has a front end portion fixed to a spider in the rear wall of the drum (3), and a region from a portion exposed to outside of the spider (10) to the front bearing with a brass bushing (11) press fit thereon for prevention of shaft rusting.

8. A driving unit as claimed in claim 1, further comprising a supporter (17) fitted between the rear wall of the tub and the stator, and coupled to the rear wall of the tub by fastening bolts which passes through the stator and thereof.

9. A driving unit as claimed in claim 1, wherein the rotor (13) is of steel or steel alloy plate and includes a bent part having a magnet setting surface (130) for supporting magnets (13c) fitted to a front portion of an inside surface of the rotor (13), the magnet setting surface being formed along a circumferential direction of a side wall (13b) extended forward from a periphery of a rear wall (13a) of the rotor.

10. A driving unit as claimed in any of claims 1 to 9, wherein the rotor (13) is formed of steel or steel alloy plate.

11. A driving unit as claimed in claim 1, wherein the rotor (13) includes;
a bent portion formed along a circumference thereof having a setting surface (130) for supporting magnets (13c) fitted to an inside of a front portion of a sidewall extended forward from periphery of a rear wall, and
a hub (132) at a center of the rear wall (13a) having a through hole for fastening members for coupling the rotor to the shaft.

12. A driving unit as claimed in claim 1, wherein the rotor includes;
a plurality of cooling fins (133) integrated with the rear wall thereof each formed in a radial direction thereof by lancing to have a length and be directed toward an opening thereof for blowing air toward the stator (14) for cooling down a heat generated at the stator when the rotor is rotated, and
a plurality of through holes (134) formed by the lancing for ventilation.

13. A driving unit as claimed in claim 12, wherein the rotor (13) further includes;
an embossing (135) between adjacent cooling fins (133) on the rear wall of the rotor for reinforcing the rotor, and
a drain hole (136) in each of the embossings, for drain of water.

14. A driving unit as claimed in claim 1, wherein the rotor (13) includes positioning holes (138) formed around a through hole at fixed intervals which the shaft passes through, wherein the positioning holes is formed for positioning an assembly position of the connector (16).

15. A driving unit as claimed in claim 14, wherein the connector (16) further includes;
a serration (9) formed in an inner circumference of the connector hub (163) matched to the serration formed in the rear end portion of the shaft, and
reinforcing ribs (161) on an outer circumference of the connector hub for reinforcing the hub.

16. A driving unit as claimed in claim 14, wherein the connector (16) is formed of plastic having a vibration mode different from the rotor.

17. A driving unit as claimed in claim 1, wherein the tub (2) includes;
a hub (132) integrated therewith in the rear wall thereof, the hub having the bearing housing inserted therein, and
fastening bosses (202) on an outer side of the hub along a circumferential direction at fixed intervals for fastening the stator to the rear wall of the tub with fastening members.

18. A driving unit as claimed in claim 1, wherein the stator (14) includes a ring formed frame (140), a coil (142) would around each of a plurality of winding parts (141) on an outer circumference of the frame, and fastening ribs (143) on an inside of the frame for fastening the stator (14) to the tub rear wall (200).

19. A driving unit as claimed in claim 18, wherein the stator includes a magnetic core (145) of segregated layers of magnetic material.

20. A drum type washing machine comprising the driving unit of any preceding claim.

## Patentansprüche

1. Antriebseinheit für eine Trommelwaschmaschine, bei welcher eine Wanne in einem Gehäuse angebracht ist und eine Trommel mittels einer mit der Trommel (3) zum Übertragen einer Antriebskraft von einem Motor zu der Trommel verbundenen Welle (4) drehbar in der Wanne (2) angebracht ist, wobei die Antriebseinheit umfasst:
ein an einem Außenumfang der Welle an gegenüberliegenden Endabschnitten angebrachtes vorderes Lager (6a) beziehungsweise hinteres Lager (6b);
ein in einem Mittelabschnitt einer Rückwand der Wanne eingebautes metallisches Lagergehäuse (7) zum Stützen des vorderen Lagers;
einen an den hinteren Endabschnitt der Welle gekoppelten Rotor (13);
einen an der Rückwand der Wanne einwärts vom Rotor befestigten Stator (14) zum Bilden des Motors zusammen mit dem Rotor; **dadurch gekennzeichnet, dass**
zum Übertragen einer Drehkraft von dem Rotor auf die Welle eine Anschlusszahnung (16) vor dem hinteren Lager an den Außenumfang der Welle gekoppelt und an dem Rotor befestigt ist; und
ein Lagerblock (9) an der Rückwand der Wanne befestigt ist, um ein Äußeres des Rotors abzudecken und das hintere Lager (6b) zu stützen.

2. Antriebseinheit nach Anspruch 1, wobei die Wanne (2) aus Kunststoff gebildet ist und eine geöffnete Vorderwand und eine geschlossene Rückwand umfasst, welche eine Dicke aufweisen, die größer ist als diejenige einer Seitenwand der Wanne.

3. Antriebseinheit nach Anspruch 1, wobei das metallische Lagergehäuse (7) an einem Mittelabschnitt der Rückwand der Wanne aus Kunststoff durch Einlagespritzguss als eine Einheit angebracht ist.

4. Antriebseinheit nach Anspruch 1, wobei das Metalllagergehäuse (7) aus einer Aluminiumlegierung gebildet ist.

5. Antriebseinheit nach Anspruch 1, wobei das Lagergehäuse (7) eine an einem Innenumfang davon gebildete Stufe (7a) umfasst, um das vordere Lager (6a) zu stützen und zu verhindern, dass das vordere Lager von dem Lagergehäuse abfällt.

6. Antriebseinheit nach Anspruch 1, wobei an dem Lagerblock an einem Umfang, durch welchen die Welle (4) verläuft, eine Stufe gebildet ist, um zu verhindern, dass das hintere Lager (6b) von dem Lagerblock abfällt.

7. Antriebseinheit nach Anspruch 1, wobei die Welle (4) einen vorderen Endabschnitt umfasst, der an einem Stegkreuz an der Rückwand der Trommel (3) befestigt ist, und einen Bereich eines der Außenseite des Stegkreuzes (10) und dem vorderen Lager zugewandten Abschnitts umfasst, wobei eine Messingbuchse (11) daran eingepresst ist, um ein Rosten der Welle zu verhindern.

8. Antriebseinheit nach Anspruch 1, welche ferner einen zwischen der Rückwand der Wanne und dem Stator eingepassten Träger (17) umfasst, der mit der Rückwand der Wanne mittels Befestigungsbolzen verbunden ist, die durch den Stator führen.

9. Antriebseinheit nach Anspruch 1, wobei der Rotor (13) aus Stahl oder einer Stahllegierungsplatte gebildet ist und einen gekrümmten Abschnitt mit einer Magnetenauflagefläche (130) zum Tragen von Magneten (13c) umfasst, angebracht an einem Vorderabschnitt einer Innenfläche des Rotors (13), wobei die Magnetenauflagefläche entlang einer Umfangsrichtung einer Seitenwand (13b) gebildet ist, die sich von einer Peripherie einer Rückwand (13a) des Rotors vorwärts erstreckt.

10. Antriebseinheit nach einem der Ansprüche 1 bis 9, wobei der Rotor (13) aus Stahl oder einer Stahllegierungsplatte gebildet ist.

11. Antriebseinheit nach Anspruch 1, wobei der Rotor (13) umfasst:
einen gekrümmten Abschnitt, der entlang eines Umfangs daran gebildet ist und eine Auflagefläche (130) zum Tragen von Magneten (13c) umfasst,
angebracht an einer Innenseite eines Vorderabschnitts einer Seitenwand, die sich von der Peripherie einer Rückwand erstreckt, und
eine Nabe (132) in der Mitte der Rückwand (13a), die eine Durchgangsbohrung für Befestigungselemente zum Koppeln des Rotors an den Schaft umfasst.

12. Antriebseinheit nach Anspruch 1, wobei der Rotor umfasst:
eine Mehrzahl von in der Rückwand integrierten Kühlrippen (133), wobei jede durch Durchstechen in einer radialen Richtung dazu gebildet ist, um eine Länge aufzuweisen und auf eine Öffnung darin gerichtet zu sein, um Luft zu dem Stator (14) zu blasen, um eine an dem Stator erzeugte Wärme abzukühlen, wenn der Rotor gedreht wird, und
eine Mehrzahl von Durchgangsbohrungen (134), die durch das Durchstechen zur Belüftung gebildet sind.

13. Antriebseinheit nach Anspruch 12, wobei der Rotor (13) ferner umfasst:
eine Prägung (135) zwischen benachbarten Kühlrippen (133) an der Rückwand des Rotors zum Verstärken des Rotors, und
ein Abflussloch (136) in jeder der Prägungen zum Abfließen von Wasser.

14. Antriebseinheit nach Anspruch 1, wobei der Rotor (13) Positionierungslöcher (138) umfasst, die in festen Abständen um eine Durchgangsbohrung gebildet sind, durch die die Welle läuft, wobei die Positionierungslöcher zum Positionieren einer Montageposition des Verbindungselements (16) gebildet sind.

15. Antriebseinheit nach Anspruch 14, wobei das Verbindungselement (16) ferner umfasst:
eine an einem Innenumfang der Verbindungsnabe (163) gebildete Verzahnung(9), passend zu der an dem hinteren Endabschnitt der Welle gebildeten Verzahnung, und
Verstärkungsrippen (161) an einem Außenumfang der Verbindungsnabe zum Verstärken der Nabe.

16. Antriebseinheit nach Anspruch 14, wobei das Verbindungselement (16) aus Kunststoff gebildet ist und einen anderen Vibrationsmodus aufweist als der Rotor.

17. Antriebseinheit nach Anspruch 1, wobei die Wanne (2) umfasst:
eine in der Rückwand integrierte Nabe (132), wobei das Lagergehäuse in die Nabe eingebracht ist, und
in festen Abständen Befestigungsansätze (202) an einer Außenseite der Nabe entlang einer Umfangsrichtung zum Befestigen des Stators an der Rückwand der Wanne mit Befestigungselementen.

18. Antriebseinheit nach Anspruch 1, wobei der Stator (14) einen ringförmigen Rahmen (140), eine Spule (142), die um jedes einer Mehrzahl von Windungsteilen (141) an einem Außenumfang des Rahmens gewunden ist, und Befestigungsrippen (143) an einer Innenseite des Rahmens zum Befestigen des Stators (14) an der Wannenrückwand (200).

19. Antriebseinheit nach Anspruch 18, wobei der Stator einen magnetischen Kern (145) aus getrennten Schichten aus magnetischem Material umfasst.

20. Trommelwaschmaschine, welche die Antriebseinheit nach einem der vorangehenden Ansprüche umfasst.

## Revendications

1. Bloc d'entraînement destiné à une machine à laver du type à tambour comportant un bac monté à l'intérieur d'un habillage et un tambour monté avec possibilité de rotation dans le bac (2) au moyen d'un arbre (4) fixé au tambour en vue d'une transmission au tambour d'une puissance d'entraînement provenant d'un moteur, le bloc d'entraînement comprenant :
un roulement avant (6a) et un roulement arrière (6b) montés sur une circonférence extérieure de l'arbre à des parties d'extrémités opposées de ceux-ci, respectivement ;
un logement métallique (7) de roulements, construit dans une partie centrale de la paroi arrière du bac afin de supporter le roulement avant ;
un rotor (13) couplé à la partie d'extrémité arrière de l'arbre ;
un stator (14) fixé à la paroi arrière du bac à l'arrière du rotor pour rassembler le moteur et le rotor ; **caractérisé en ce que**
un raccord (16) est couplé par dentelure à la circonférence extérieure de l'arbre en face du roulement arrière et fixé au rotor, en vue d'une transmission à l'arbre d'une puissance de rotation provenant du rotor ; et
un support de roulement (9) est fixé à la paroi arrière du bac pour couvrir une partie extérieure du rotor et supporter le roulement arrière (6b).

2. Bloc d'entraînement tel que revendiqué dans la revendication 1, dans lequel le bac (2) est formé en matière plastique et comporte une paroi avant ouverte et une paroi arrière fermée ayant une épaisseur supérieure à celle d'une paroi latérale du bac.

3. Bloc d'entraînement tel que revendiqué dans la revendication 1, dans lequel le logement métallique (7) de roulements est monté au niveau d'une partie centrale de la paroi arrière du bac en matière plastique en tant qu'une seule unité rapportée moulée par injection.

4. Bloc d'entraînement tel que revendiquée dans la revendication 1, dans lequel le logement de roulements (7) est formé d'un alliage d'aluminium.

5. Bloc d'entraînement tel que revendiquée dans la revendication 1, dans lequel le logement de roulements (7) comporte un épaulement (7a) formé sur une circonférence intérieure de celui-ci pour supporter le roulement avant (6a) et empêcher le roulement avant de tomber du logement de roulements.

6. Bloc d'entraînement tel que revendiqué dans la revendication 1, dans lequel le support de roulement comporte un épaulement formé au niveau d'une circonférence à travers lequel l'arbre (4) passe pour empêcher le roulement arrière (6b) de tomber du support de roulement.

7. Bloc d'entraînement tel revendiqué dans la revendication 1, dans lequel l'arbre (4) comporte une partie d'extrémité avant fixée à un croisillon dans la paroi arrière du tambour (3), et une région d'une partie exposée à l'extérieur du croisillon (10) vers le roulement avant avec une douille en laiton (11) montée à pression sur celui-ci en vue d'empêcher l'arbre de rouiller.

8. Bloc d'entraînement tel revendiqué dans la revendication 1, comprenant en outre un élément de support (17) monté entre la paroi arrière du bac et le stator, et couplé à la paroi arrière du bac par des boulons de fixation qui passent à travers le stator et celui-ci.

9. Bloc d'entraînement tel revendiqué dans la revendication 1, dans lequel le rotor (13) est formé d'une plaque d'acier ou d'alliage d'acier et comporte une partie courbée comportant une surface d'emboîtement (130) d'aimant destinée à supporter des aimants (13c) montés sur une partie avant d'une surface intérieure du rotor (13), la surface d'emboîtement d'aimant étant formée le long d'une direction circonférentielle d'une paroi latérale (13b) s'étendant vers l'avant depuis une périphérie d'une paroi arrière (13a) du rotor.

10. Bloc d'entraînement tel que revendiqué dans l'une quelconque des revendications 1 à 9, dans lequel le rotor (13) est formé d'une plaque d'acier ou d'alliage d'acier.

11. Bloc d'entraînement tel que revendiqué dans la revendication 1, dans lequel le rotor (13) comporte ;
une partie courbée formée le long d'une circonférence de celui-ci présentant une surface d'emboîtement (130) destinée à supporter des aimants (13c) montés à l'intérieur d'une partie avant d'une paroi latérale s'étendant vers l'avant depuis une périphérie d'une paroi arrière, et
un moyeu (132) au centre de la paroi arrière (13a) comportant un trou traversant destiné à un élément de fixation afin d'accoupler le rotor à l'arbre.

12. Bloc d'entraînement tel que revendiqué dans la revendication 1, dans lequel le rotor comporte ;
une pluralité d'ailettes de refroidissement (133) intégrées à la paroi arrière de celui-ci chacune étant formée dans une direction radiale de celle-ci par soyage pour présenter une longueur et être dirigée vers son ouverture afin de souffler de l'air vers le stator (14) en vue de refroidir la chaleur générée au niveau du stator lorsque le rotor est entraîné en rotation, et
une pluralité de trous traversants (136) formés par le soyage pour la ventilation.

13. Bloc d'entraînement tel que revendiqué dans la revendication 12, dans lequel le rotor (13) comporte en outre ;
un bossage (135) entre des ailettes de refroidissement adjacentes (133) sur la paroi arrière du rotor afin de renforcer le rotor, et
un trou de drainage (136) dans chacun des bossages, afin de drainer l'eau.

14. Bloc d'entraînement tel que revendiqué dans la revendication 1, dans lequel le rotor (13) comporte des trous de positionnement (138) formés autour d'un trou traversant à des intervalles fixes à travers lesquels l'arbre passe, où les trous de positionnement sont destinés au positionnement d'une position de montage du raccord (16).

15. Bloc d'entraînement tel que revendiqué dans la revendication 14, dans lequel le raccord (16) comporte en outre ;
une dentelure (9) formée dans une circonférence intérieure du moyeu de raccord (163), cette dentelure étant adaptée à la dentelure formée dans la partie d'extrémité arrière de l'arbre, et
des nervures de renfort (161) sur une circonférence extérieure du moyeu de raccord afin de renforcer le moyeu.

16. Bloc d'entraînement tel que revendiqué dans la revendication 14, dans lequel le raccord (16) est formé d'une matière plastique présentant un mode de vibration différent de celui du rotor.

17. Bloc d'entraînement tel que revendiqué dans la revendicationl, dans lequel le bac (2) comprend :
un moyeu (132) intégré à celui-ci dans la paroi arrière de celui-ci, le moyeu comportant le logement de roulements inséré dans celui-ci ; et
des bossages de fixation (202) sur un côté extérieur du moyeu le long de la direction de la circonférence à des intervalles fixes pour fixer le stator à la paroi arrière du bac par des éléments de fixation.

18. Bloc d'entraînement tel que revendiqué dans la revendication 1, dans lequel le stator (14) comprend un cadre formé en anneau (140), une bobine (142) entoureraient chacune d'une pluralité des parties d'enroulement (141) sur une circonférence extérieure du cadre, et des nervures de fixation (143) à l'intérieur du cadre pour fixer le stator (14) à la paroi arrière (200) du bac.

19. Bloc d'entraînement tel que revendiqué dans la revendication 18, dans lequel le stator (14) comprend un noyau magnétique (145) présentant des couches séparées d'un matériau magnétique.

20. Machine à laver du type à tambour comprenant un bloc d'entraînement selon l'une quelconque des revendications précédentes.
